# EUROPEAN PATENT SPECIFICATION

(11) **EP 2 239 130 B1**
(45) Date of publication and mention of the grant of the patent: **20.03.2013**
(21) Application number: 08863336.7
(22) Date of filing: 04.12.2008
(51) Int. Cl.: B29D 30/32, B29D 30/60, B60C 15/06

(54) **PNEUMATIC TIRE MANUFACTURING METHOD, AND PNEUMATIC TIRE**
LUFTREIFENHERSTELLUNGSVERFAHREN UND LUFTREIFEN
PROCÉDÉ DE FABRICATION DE PNEU ET PNEU

(30) Priority: 14.12.2007 JP 2007323645
(43) Date of publication of application: 13.10.2010
(73) Proprietor: Sumitomo Rubber Industries, Ltd., Kobe-shi, Hyogo 651-0072 (JP)
(72) Inventor: MAFUNE, Toshiyuki, Kobe-shi Hyogo 651-0072 (JP)
(74) Representative: Manitz, Finsterwald & Partner GbR
(86) International application number: PCT/JP2008/072072
(87) International publication number: WO 2009/078286

(56) References cited:
- EP-A1- 1 358 998
- EP-A1- 1 634 727
- WO-A1-02/060676
- WO-A1-2006/048924
- JP-A- 2000 094 542
- JP-A- 2006 346 999
- JP-A- 2007 296 871

## Description

### TECHNICAL FIELD

The present invention relates to a method for manufacturing pneumatic tires in which a bead apex rubber is formed of a rubber strip-wound body, and a pneumatic tire manufactured thereby.

### BACKGROUND ART

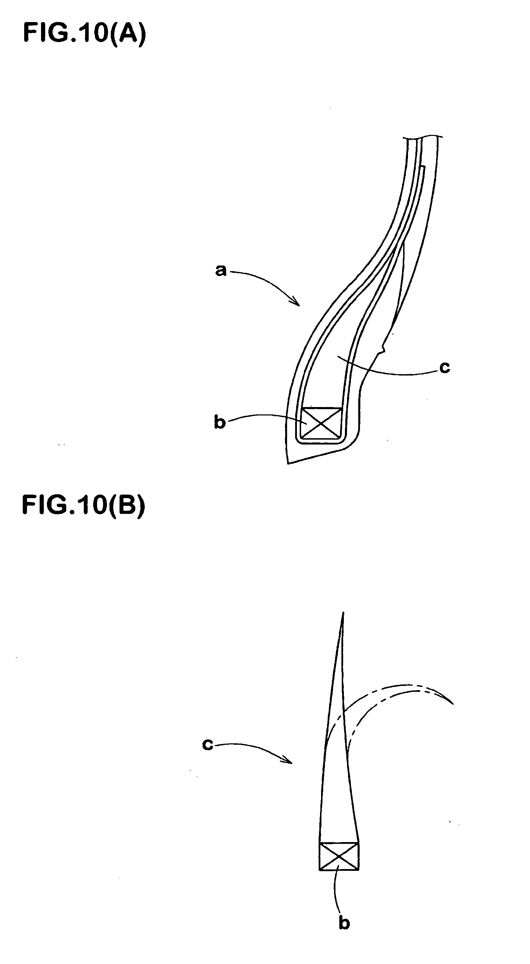

In general, as shown in Fig. 10(A), in order to reinforce a bead portion "a" to thereby improve the steering stability and the bead durability, a bead apex rubber "c" having a triangular cross section and extending radially outwardly from a radially outer surface of a bead core "b" is disposed in the bead portion "a". Such a tire has been conventionally manufactured by a method in which the bead core "b" and the bead apex rubber "c" are joined together in a separate step to form an annular bead core assembly, and the bead core assembly is then supplied to a green tire production line.

On the other hand, formation of the bead core assembly has been conventionally carried out by forming a rubber member having a triangular cross section by extrusion molding using a rubber extruder, winding this rubber member on the outer surface of the bead core by one round, and butt-joining the circumferential both ends thereof.

### DISCLOSURE OF THE INVENTION

### Problem to be Solved by the Invention

However, such an extrusion molding method brings about nonuniformity in rigidity and strength, resulting in deterioration of tire uniformity, for the reason that misalignment of the ends or the like may occur at the joint portion.

In recent years, from the viewpoints of weight reduction of tire and performances of tire such as steering stability and ride comfortability, there is a tendency that as a bead apex rubber "c" is preferred a thin member having a large height as shown in Fig. 10(B). However, a bead apex rubber having such a cross section is hard to maintain a desired shape, since a tip side portion curls markedly owing to shrinkage of rubber. Therefore, height increase and thickness reduction of the bead apex rubber are greatly restricted.

Accordingly, it is an object of the present invention to provide a method for manufacturing a pneumatic tire which can efficiently form a bead apex rubber uniform in the circumferential direction to thereby improve the production efficiency and uniformity of tires, and which can readily produce tires provided with a bead apex rubber having various easy-to-deform cross sectional shapes, and to provide a pneumatic tire manufactured by the method.

A technology relating to formation of a bead apex rubber from a wound body obtained by spirally winding a rubber strip in an overlapping manner is disclosed for example in the following Patent Literature 1, Patent Literature 2 and Patent Literature 3.
Patent Literature 1: JP-A-2007-168241
Patent Literature 2: EP 1 358 998 A1
Patent Literature 3: JP 2007-296871
Means to Solve the Problem

The first aspect of the invention is directed to a method for manufacturing a pneumatic tire as defined in claim 1.

The second aspect of the invention is directed to a pneumatic tire characterized by being formed by the manufacturing method of the first invention.

### Effects of the Invention

According to the first aspect of the invention, strip-wound bodies for forming the bead apexes are formed on the cylindrical ply inner portion which constitutes the carcass ply body portion, and/or on the cylindrical ply outer portions which constitute the carcass ply turnup portions, by spirally winding a rubber strip on the cylindrical ply (carcass ply) formed on a molding former.

Like this, the bead apex rubber is formed from a strip-wound body in which the strip continues circumferentially without any joint and, therefore, the uniformity of tire can be improved. Further, since the strip-wound body sticks to the ply inner portion and/or the ply outer portion and are supported by them, it does not deform in the course of the expanding and the turning up and it maintains its shape, even after the turning up, in an integrated state such that it is sandwiched between the ply inner portion and the ply outer portion under pressure. Therefore, even in the case that the bead apex rubber has various cross sectional shapes easy to deform, e.g., those having a great height or thin wall, it can be easily formed with good accuracy and good efficiency without causing deformation.

Further, since the bead apex rubber can be formed on a green tire production line of a conventional single stage system without installing another line, an excellent productivity can be secured. Moreover, since proper shape and size of bead apex rubbers can be set at will for every kind (including size) of tire, it is possible to optimize the performances of tire without impairing the productivity.

### BRIEF DESCRIPTION OF THE DRAWINGS

Fig. 1 is a cross sectional view showing an example of a pneumatic tire formed by the manufacturing method of the present invention;
Fig. 2 is a cross sectional view showing a bead portion together with a bead apex rubber in an enlarged form;
Fig. 3 is a cross sectional view showing conceptually a method for forming a bead apex rubber;
Fig. 4 is a cross sectional view showing a molding former together with the carcass-winding step;
Fig. 5 is a cross sectional view showing the strip-winding step;
Figs. 6(A) and 6(B) are cross sectional views showing conceptually the expanding step and the joining step;
Fig. 7 is cross sectional views of rubber strips;
Fig. 8 is a cross sectional view showing another embodiment of the strip-winding step;
Fig. 9 is a cross sectional view showing still another embodiment of the strip-winding step; and
Figs. 10(A) and 10(B) are views for illustrating a problem in prior art.

### Explanation of Symbols

- 2: Tread portion
- 3: Sidewall portion
- 4: Bead portion
- 5: Bead core
- 6a: Ply body portion
- 6b: Ply turnup portion
- 6A: Carcass ply
- 6A1: Cylindrical ply
- 6A1a: Ply inner portion
- 6A1b: Ply outer portion
- 8: Bead apex rubber
- 20: Rubber strip
- 21: Strip-wound body
- 21a: Inner strip-wound body
- 21b: Outer strip-wound body
- 21c: Connecting strip-wound body
- 30: Molding former
- P: Core setting position
- S1: Carcass winding step
- S2: Bead core setting step
- S3: Strip-winding step
- S4: Expanding step
- S5: Joining step

### BEST MODE FOR CARRYING OUT THE INVENTION

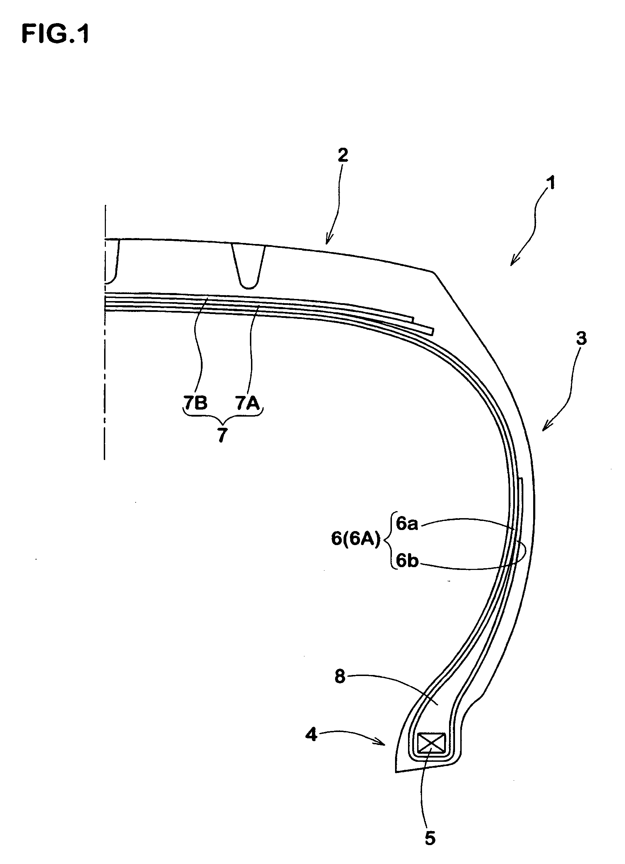

An embodiment of the present invention will be explained with reference to the accompanying drawings. Fig. 1 is a cross sectional view showing an example of a pneumatic tire formed by the manufacturing method of the present invention.

As shown in Fig. 1, a pneumatic radial tire 1 is provided with a carcass 6 that extends from a tread portion 2 to bead cores 5 in bead portions 4 through sidewall portions 3, and bead apex rubbers 8 disposed in the bead portions 4.

The carcass 6 comprises at least one carcass ply 6A, single carcass ply in this embodiment, in which carcass cords are arranged at an angle of, for example, 75 to 90° with respect to the tire circumferential direction. The carcass ply 6A has a toroidal ply body portion 6a which extends between the bead cores 5, 5, and ply turnup portions 6b which are continuous with the both ends of the ply body portion 6a and are turned up around the bead cores 5 from the axially inward to the axially outward of the tire.

A belt layer 7 is disposed inside the tread portion 2 and radially outward of the carcass 6. The belt layer 7 comprises at least two belt plies, two belt plies 7A and 7B in this embodiment, in each of which belt cords are arranged at an angle of, for example, about 10 to about 35° with respect to the tire circumferential direction. The belt plies are stacked so that the belt cords in one ply intersect the cords in the other belt ply, whereby the rigidity of the belt is enhanced to strongly reinforce approximately full width of the tread portion 2 with a hoop effect.

The bead apex rubber 8 extends radially outwardly between the ply body portion 6a and each ply turnup portion 6b from the bead core 5 in a tapered manner, thereby reinforcing a region extending from the bead portion 4 to the sidewall portion 3 to improve the steering stability.

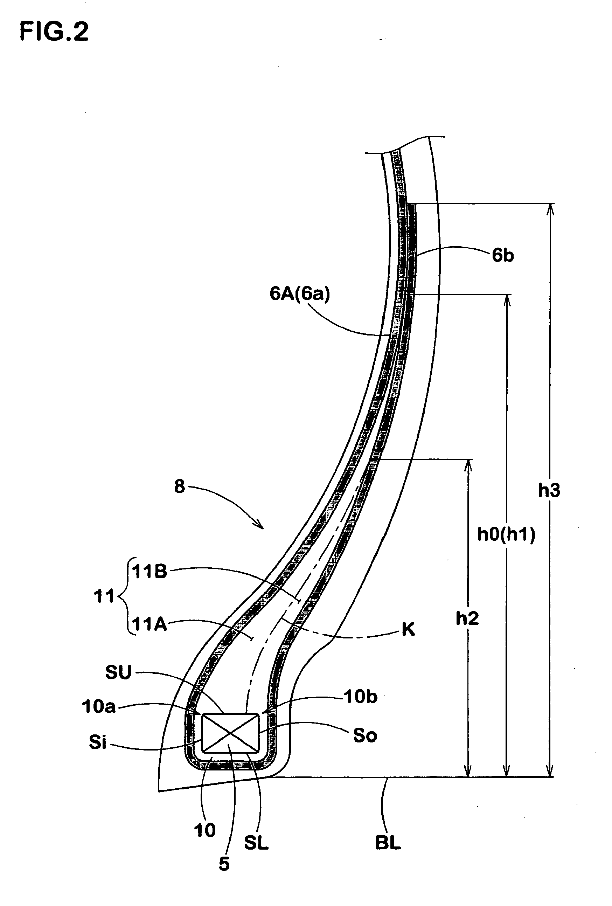

As shown in Fig. 2 in an enlarged form, the bead apex rubber 8 in this embodiment comprises a U-shaped apex bottom part 10 extending along an axially inner surface Si, a radially inner surface SL and an axially outer surface So of the bead core 5, and an apex body part 11 having an approximately triangular cross section which extends radially outwardly from a radially outer surface SU of the bead core 5. The apex body part 11 is divided into an axially inner body part 11A and an axially outer body part 11 B by a boundary K which rises from the bead core 5.

The radial height h3 of the ply turnup portion 6b from a bead base line BL is larger than at least the radial height h2 of the axially outer body part 11B of the apex body part, and is preferably larger than the radial height h0 of the bead apex rubber 8. It is also preferable that the radial height of one of the axially inner and outer body parts 11A and 11B is larger than the radial height of the other. In this embodiment is shown a case that the radial height h1 of the axially inner body part 11A is larger than the radial height h2 of the axially outer body part 11B.

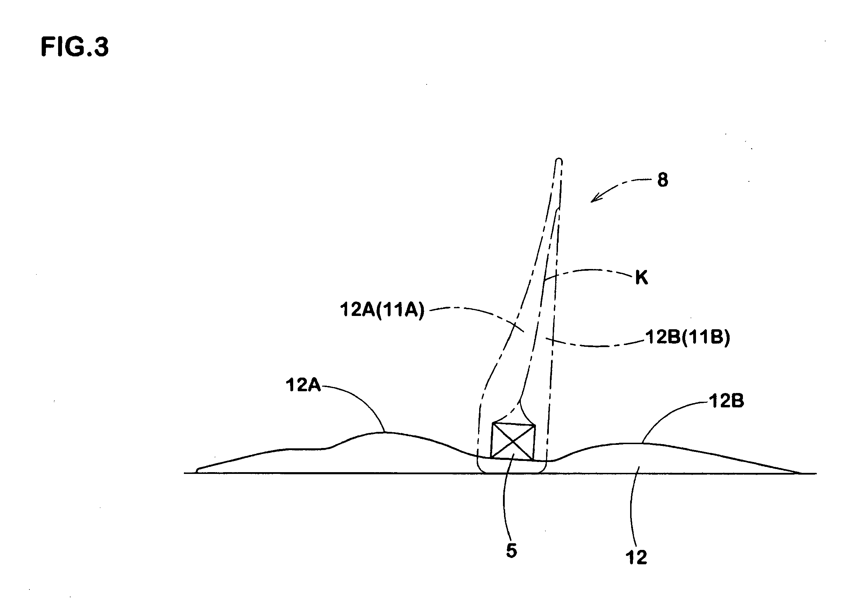

The axially inner body part 11A is continuous with an axially inner end 10a of the apex bottom part 10, and the axially outer body part 11B is continuous with an axially outer end 10b of the apex bottom part 10. As conceptually shown in Fig. 3, such a bead apex rubber 8 can be formed by placing a belt-like body 12 under the bead core 5, turning up an inner part 12A of the belt-like body 12 which extends axially inwardly from the bead core 5 and an outer part 12B of the belt-like body 12 which extends axially outwardly from the bead core 5, respectively, around the bead core 5, and joining them to each other on a radially outer side of the bead core 5. The joint surface thereof forms the boundary K.

The method for manufacturing pneumatic tires 1 will be explained below. This method is characterized by including, in a green tire forming step for forming an unvulcanized green tire, a carcass winding step S1, a bead core setting step S2, a strip winding step S3, an expanding step S4, and a joining step S5.

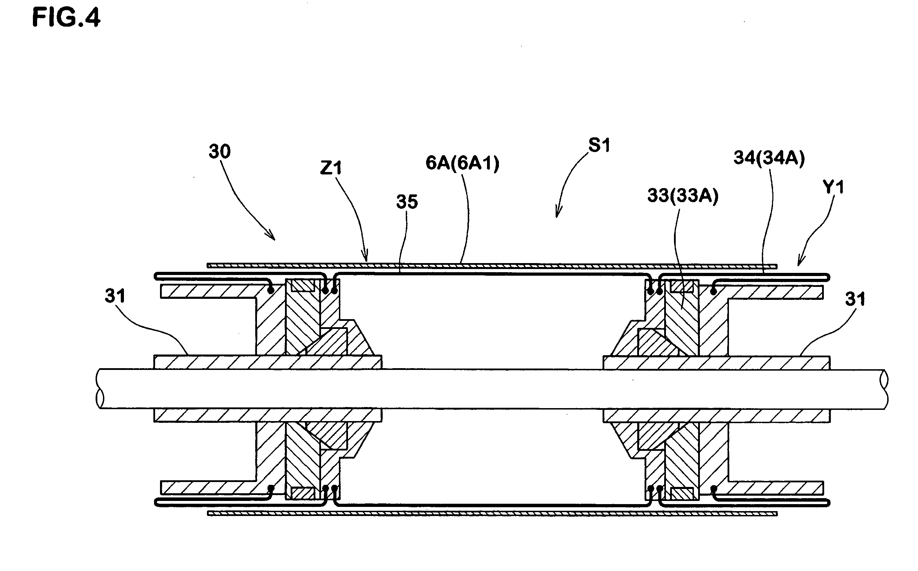

Specifically, in the carcass winding step S 1 is formed a cylindrical ply 6A1 by circumferentially winding a sheet-like carcass ply 6A onto a cylindrical molding former 30 by one round, as shown in Fig. 4. As a carcass ply 6A can be used a laminate sheet wherein an inner liner rubber (not shown) is laminated to the inner surface of the carcass ply 6A. However, an inner liner rubber may be wound on the molding former 30 by one round prior to winding the carcass ply 6A, or a carcass ply 6A of a single layer in which an air-low-permeable rubber is used as a topping rubber of the carcass ply 6A to have a function as an inner liner rubber may be wound by one round.

Here, the molding former 30 is a former used in a so-called single stage forming method. In this embodiment is used a former having such a well known structure that a bead lock means 33 for supporting the bead core 5 and a folding means 34 for radially outwardly turning up the ply turnup portion 6b are mounted on each of a pair of slide cylinders capable of making a relative movement in the axial direction of the former to approach to and separate away from each other.

The bead lock means 33 includes a bead receiving ring 33A the diameter of which is expandable and contractible. The bead core 5 is fixed to the peripheral surface of the ring 33A by expansion of the diameter of the ring 33A. The folding means 34 comprises a bladder 34A which is expandable by filling of a gas or the like. In this embodiment, an inner end of the bladder 34A is fixed on the inside of the bead receiving ring 33A in the axial direction of the former, and an outer end of the bladder 34A is fixed on the outside of the bead receiving ring 33A in the axial direction of the former. In a standard state Y 1 prior to the inflation, the bladder 34A is folded into a cylindrical form to lay down outside of the outer end of the bladder in the axial direction of the former. Numeral 35 in the drawing denotes a central bladder, and in a standard state Z1 prior to the inflation thereof, it is in a cylindrical form. The central bladder acts as a guide and a support for conducting the one round winding of the carcass ply 6A in the carcass winding step. Further, the central bladder 35 inflates with approaching movement of the bead receiving rings 33A, 33A, thereby shaping the ply body portion 6a into a toroidal form. Conventional formers having various structures can be used as the former 30 without being limited to that shown in this embodiment.

In the bead core setting step S2, bead cores 5 are set at core setting positions P located on the cylindrical ply 6A1 on axially both sides thereof (in this embodiment, the positions P being positions of the bead receiving rings 33A). In this embodiment, the bead core setting step S2 is conducted after the strip winding step S3, but it can be conducted prior to the strip winding step S3 in accordance with the structure of the bead apex rubber 8.

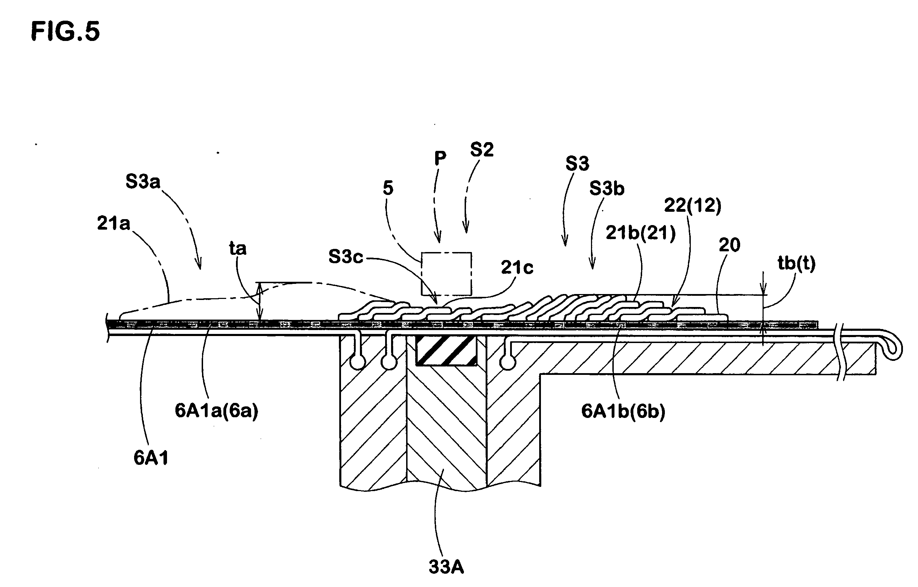

In the strip winding step S3, as shown in Fig. 5, a narrow long rubber strip 20 is spirally wound in the tire circumferential direction with an overlap on a ply inner portion 6A1a of the cylindrical ply 6A1 which is located axially inward of each of the core setting positions P and will constitute the ply body portion 6a, and/or on ply outer portions 6A1b of the cylindrical ply 6A1 which are located axially outward of the core setting positions P and will constitute the ply turnup portions 6b, thereby forming strip-wound bodies 21 for forming the bead apex.

In this embodiment, the strip winding step S3 comprises a step S3a of forming inner strip-wound bodies 21a on the ply inner portion 6A1a, a step S3b of forming outer strip-wound bodies 21b on the ply outer portions 6A1b, and a step S3c of forming connecting strip-wound bodies 21c for connecting the inner and outer strip-wound bodies 21a and 21 b, passing through the core setting positions P. Particularly, in this embodiment, a single rubber strip 20 is continuously wound from one end side in the tire axial direction toward the other end side (in this embodiment, from an outer end side toward an inner end side), whereby the outer wound body 21b, the connecting wound body 21c and the inner wound body 21a are continuously formed in that order from the rubber strip 20 to give a single wound body 22. This wound body 22 corresponds to the belt-like body 12 mentioned above.

The direction of winding the rubber strip 20 is not particularly limited. For example, the strip 20 may be wound continuously from an axially inner end side toward an axially outer end side, or the winding direction may be different among the strip-wound bodies 21b, 21c and 21a.

In this embodiment, after forming such a wound body 22, the bead core setting step S2 is conducted. From the viewpoint of easiness in insertion of the bead core 5, it is preferable to set the maximum thickness "tb" of the outer wound body 21b smaller than the maximum thickness "ta" of the inner wound body 21a. The sectional shapes and sizes of the inner and outer wound bodies 21a and 21b are suitably determined in accordance with the sectional shape and size of the bead apex rubber 8 to be formed.

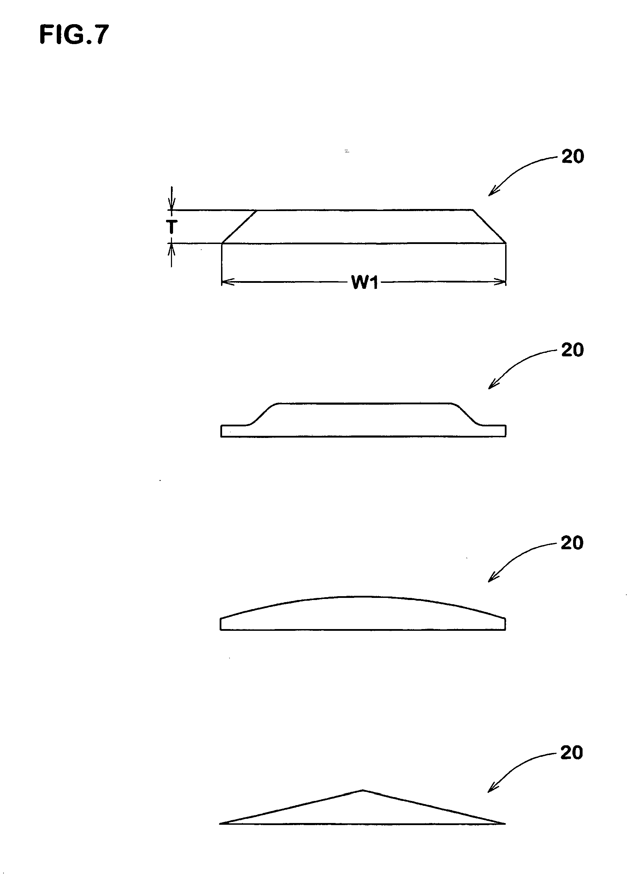

As the rubber strip 20 can be suitably used a rubber strip having a narrower width and a smaller thickness than those used in conventional strip-winding methods, e.g., strips as shown in Fig. 7 having a width W1 of 5 to 50 mm and a maximum thickness T of 1/10 to 1/100 of the strip width W1. Preferably, the strip width W1 is 7 mm or more, and is 30 mm or less, especially 20 mm or less. As to a sectional shape of the rubber strip 20, strips having such a sectional shape that the thickness of both edge portions is smaller than that of a central portion in the width direction, e.g., trapezoidal, lenticular and triangular shapes and other shapes analogous thereto, are preferred from the viewpoints of enhancing the shape accuracy of the bead apex rubber 8 to be formed and of suppressing air entrapment.

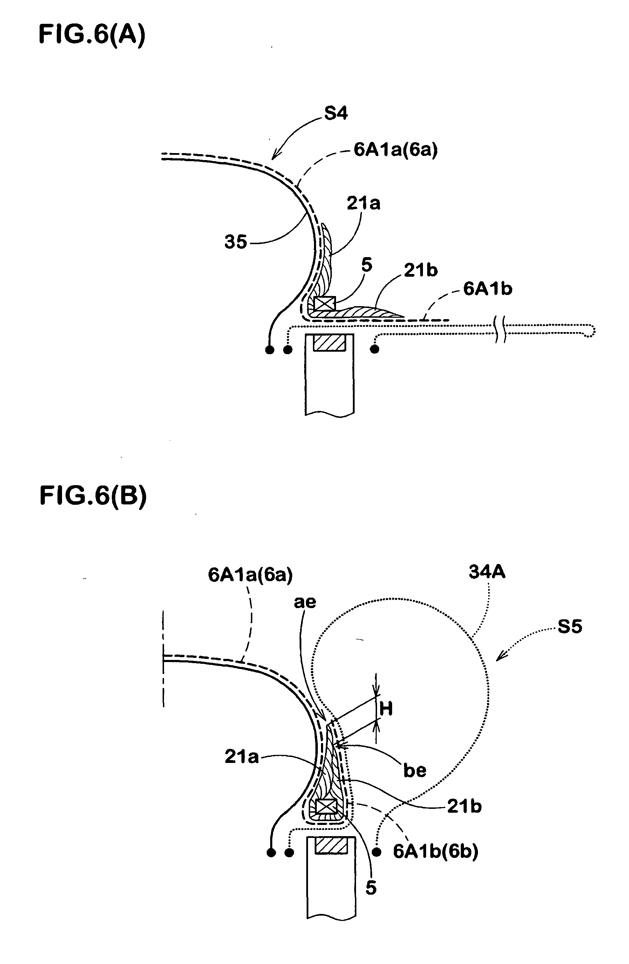

In the expanding step S4, as shown in Fig. 6(A), the ply inner portion 6A1a is toroidally expanded through a bladder 35 with approaching the bead cores 5, 5 to each other.

In the joining step S5, as shown in Fig. 6(B), the ply outer portion 6A1b is turned up around the bead core 5 through a bladder 34A, whereby the strip-wound bodies 21a and 21b are sandwiched between the toroidally expanded ply inner portion 6A1a and the ply outer portion 6A1b and are pressed against them to be joined into an integrated body.

Like this, since the bead apex rubber 8 is formed of a circumferentially continuous strip-wound body 21, the uniformity is enhanced, so the tire uniformity can be improved. Further, since the strip-wound body 21 is supported by the ply inner portion 6A1a and the ply outer portion 6A1b in the state of being stuck to them, it is prevented from deforming in the course of expansion or turning up. Further, since, after the turning up, the strip-wound bodies are still sandwiched and compressed between the ply inner portion 6A1a and the ply outer portion 6A1b, they are in an integrated state and its shape is retained. Therefore, even if the bead apex rubber 8 has a sectional shape easy to deform, e.g., large height or thin wall, it can be easily formed with good accuracy and good efficiency without being deformed. Further, since the bead apex rubber 8 can be formed on a green tire manufacturing line of a conventional single stage system without installing another line, an excellent productivity can be secured. Moreover, since a bead apex rubber 8 having a proper shape and a proper size can be formed at will for every kind (including size) of tire, it is possible to optimize the tire performances without impairing the productivity.

If the inner and outer strip-wound bodies 21a and 21b are joined in the joining step S5 so as to match the tips "ae" and "be" of the wound bodies 21a and 21b, the thickness of the tip of the bead apex rubber 8 is increased to invite a tendency of air accumulation. Therefore, it is preferable to locate the tips "ae" and "be" at radially different positions. It is preferable that the radial distance H between the tips "ae" and "be" is 2 mm or more, especially 5 mm or more.

Tires manufactured by the method of the present invention including the strip winding step S3 as mentioned above can be easily distinguished from other tires, since the interface between the rubber strips 20, 20 appears in the cross section of the bead apex rubber 8.

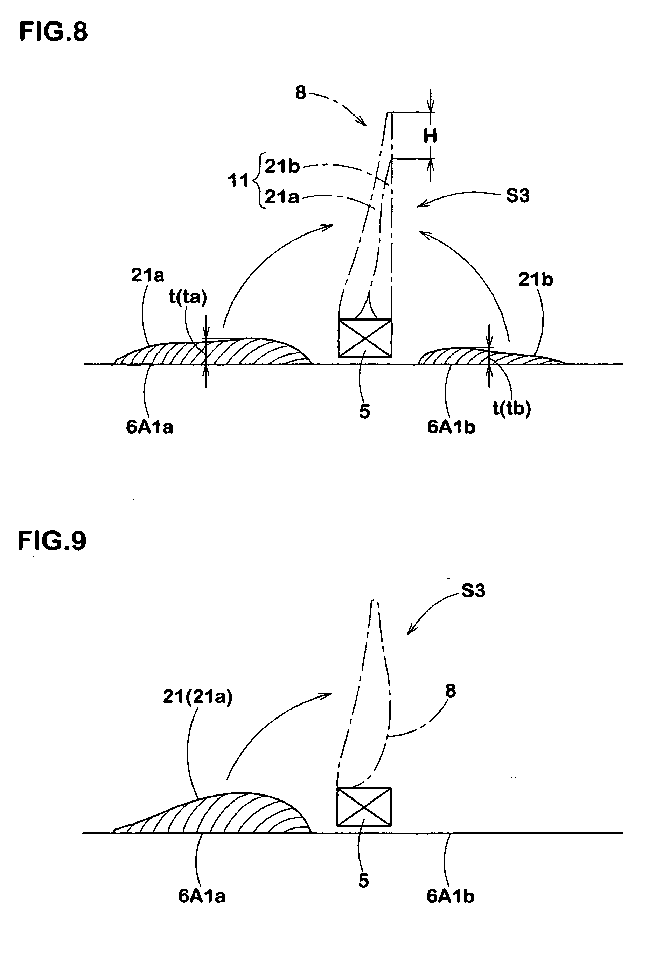

Other embodiments of the strip winding step S3 are shown in Figs. 8 and 9. In the strip winding step S3 shown in Fig. 8, the connecting strip-wound body 21c is not formed, but the inner strip-wound body 21a on the ply inner portion 6A1a and the outer strip-wound body 21b on the ply outer portion 6A1b are independently formed, respectively. Therefore, a bead apex rubber 8 made of only the apex body part 11 is formed, so the volume of a rubber around the bead core can be decreased to achieve downsizing of the bead portion 4.

The inner and outer strip-wound bodies 21a and 21b may have different rubber compositions from each other. For example, a soft rubber having a small rubber hardness after vulcanization is used in the inner strip-wound body 21a, and a hard rubber having a large rubber hardness after vulcanization is used in the outer strip-wound body 21b, whereby the ride comfortability can be improved with improving the steering stability. Particularly, since the thickness "t" of the inner and outer strip-wound bodies 21a and 21b and the radial height thereof after joining can be arbitrarily changed in the strip winding step S3, it is possible to easily try to further improve the tire performances by combining change in these sizes with use of rubbers having different physical properties such as rubber hardness and so on.

In the strip winding step S3 shown in Fig. 9, a strip-wound body 21 is formed on only either one of the ply inner portion 6A1a and the ply outer portion 6A1b, and the bead apex rubber 8 is formed of only this wound body 21. Fig. 9 shows a case where only the inner strip-wound body 21a is formed on the ply inner portion 6A1a.

In case of excluding the step S3c of forming the connecting strip-wound body 21c, the strip winding step S3 may be conducted after conducting the bead core setting step S2.

While a particularly preferable embodiment of the present invention has been described, the present invention according to the claims can be practiced with various changes and modifications without being limited to only such an embodiment shown in the drawings.

### EXAMPLES

A summer radial tire for passenger cars having a tire size of 215/45R17 and having the structure shown in Fig. 1 was manufactured according to the method of the present invention. The uniformity (RFV, LFV, CON) of the tire was measured and compared with a conventional tire. The specifications of the tire of Conventional Example are substantially the same as those of the tire of the Example except that in the production of the tire of Conventional Example, a bead apex rubber was formed by preparing a rubber member having a triangular cross section by extrusion from a rubber extruder, winding it on a bead core by one round, and butt-joining the circumferential both ends thereof.

### <Uniformity>

RFV, LFV and CON of tires were measured using a tire uniformity tester according to JASO C607: 2000, "Test Procedures for Automobile Tire Uniformity" under conditions of rim 17 x 7J, tire rotation speed 60 r.p.m., air pressure 200 kPa, and vertical load 4.08 kN. Each value is an average value of 100 tires. The smaller the value, the better the uniformity.

**Table 1**

| | Example 1 | Conventional Example 1 |
|---|---|---|
| Uniformity | | |
| RFV (N) | 51 | 56 |
| LFV (N) | 49 | 55 |
| CON (N) | -24 | -33 |

It is confirmed in Table 1 that the tire uniformity can be improved by the manufacturing method of the present invention.

## Claims

1. A method for manufacturing a pneumatic tire comprising a carcass ply (6A) having a toroidal ply body portion (6a) which extends from a tread portion (2) to bead cores (5) in bead portions (4) through sidewall portions (3), and ply turnup portions (6b) which are continuous with the ply body portion (6a) and are turned up around said bead cores (5) from the axially inward to the axially outward, and bead apex rubbers (8) extending radially outwardly from said bead cores (5) between said ply body portion (6a) and said ply turnup portions (6b), the method being **characterized by** including:
a carcass winding step of circumferentially winding a sheet-like carcass ply (6A) onto a molding former to form a cylindrical ply (6A1),
a bead core setting step of setting bead cores (5) at core setting positions (P) located on said cylindrical ply (6A1) and on axially both sides thereof,
a strip winding step of forming strip-wound bodies (21) for forming the bead apex rubbers (8) by spirally winding a narrow long rubber strip in the tire circumferential direction with an overlap on a ply inner portion (6A1a) of said cylindrical ply (6A1) which is located axially inward of said core setting positions (P) and constitutes the ply body portion (6a), and/or on ply outer portions (6A1b) of said cylindrical ply (6A1) which are located axially outward of said core setting positions (P) and constitute the ply turnup portions (6b),
an expanding step of toroidally expanding said ply inner portion (6A 1 a) of said cylindrical ply (6A1), and
a joining step of joining said ply inner portion (6A1a), said strip-wound bodies (21) and said ply outer portions (6A1b) by turning up said ply outer portions (6A1b) of said cylindrical ply (6A1) around said bead cores (5) to sandwich said strip-wound bodies (21) between said toroidal ply inner portion (6A1a) and said ply outer portions (6A1b),
wherein said strip winding step includes a step of forming inner strip-wound bodies (21 a) on said ply inner portion (6A1a) and a step of forming outer strip-wound bodies (21b) on said ply outer portions (6A1b), and in said joining step, said ply inner portion (6A1a), said inner and outer strip-wound bodies (21a, 21b) and said ply outer portions (6A1b) are joined together.

2. The method of claim 1, wherein said strip winding step is conducted prior to said bead core setting step, and includes a step of forming connecting strip-wound bodies (21) for connecting said inner and outer strip-wound bodies (21a, 21b), passing through said core setting positions (P).

3. A pneumatic tire manufactured by the method of claim 1 or 2.

## Patentansprüche

1. Verfahren zum Herstellen eines Luftreifens, der eine Karkasslage (6A) mit einem torusförmigen Lagenkörperabschnitt (6a), der sich von einem Laufflächenabschnitt (2) zu Wulstkernen (5) in Wulstabschnitten (4) durch Seitenwandabschnitte (3) erstreckt, und Lagenumschlagabschnitten (6b), die durchgehend mit dem Lagenkörperabschnitt (6a) sind und um die Wulstkerne (5) von axial innen nach axial außen umgeschlagen sind, und Wulstkernreitergummis (8) umfasst, die sich von den Wulstkernen (5) radial nach außen zwischen dem Lagenkörperabschnitt (6a) und den Lagenumschlagabschnitten (6b) erstrecken, wobei das Verfahren **dadurch gekennzeichnet ist, dass** es umfasst:
einen Karkassenwickelschritt eines Wickelns einer bahnartigen Karkasslage (6A) in Umfangsrichtung auf eine Formungstrommel, um eine zylindrische Lage (6A1) zu bilden,
einen Wulstkernsetzschritt eines Setzens von Wulstkernen (5) an Kernsetzpositionen (P), die sich auf der zylindrischen Lage (6A1) und auf beiden axialen Seiten derselben befinden,
einen Streifenwickelschritt eines Bildens von Streifenwickelkörpern (21) zum Bilden der Wulstkernreitergummis (8) durch spiralförmiges Wickeln eines schmalen langen Kautschukstreifens in der Reifenumfangsrichtung mit einer Überlappung auf einem Lageninnenabschnitt (6A1a) der zylindrischen Lage (6A1), der sich axial innen von den Kernsetzpositionen (P) befindet und den Lagenkörperabschnitt (6a) bildet, und/oder auf Lagenaußenabschnitten (6A1b) der zylindrischen Lage (6A1), die sich axial außen von den Kernsetzpositionen (P) befinden und die Lagenumschlagabschnitte (6b) bilden,
einen Ausdehnungsschritt eines torusförmigen Ausdehnens des Lageninnenabschnitts (6A1a) der zylindrischen Lage (6A1), und
einen Fügeschritt eines Zusammenfügens des Lageninnenabschnitts (6A1a), der Streifenwickelkörper (21) und der Lagenaußenabschnitte (6A1b) durch Umschlagen der Lagenaußenabschnitte (6A1b) der zylindrischen Lage (6A1) um die Wulstkerne (5), um die Streifenwickelkörper (21) als Schicht zwischen dem torusförmigen Lageninnenabschnitt (6A1a) und den Lagenaußenabschnitten (6A1b) anzuordnen,
wobei der Streifenwickelschritt einen Schritt eines Bildens innerer Streifenwickelkörper (21a) auf dem Lageninnenabschnitt (6A1a) und einen Schritt eines Bildens äußerer Streifenwickelkörper (21 b) auf den Lagenaußenabschnitten (6A1b) umfasst, und in dem Fügeschritt der Lageninnenabschnitt (6A1a), die inneren und äußeren Streifenwickelkörper (21a, 21b) und die Lagenaußenabschnitte (6A1b) zusammengefügt werden.

2. Verfahren nach Anspruch 1, wobei der Streifenwickelschritt vor dem Wulstkernsetzschritt durchgeführt wird und einen Schritt eines Bildens von verbindenden Streifenwickelkörpern (21) zum Verbinden der inneren und äußeren Streifenwickelkörper (21a, 21b), die durch die Kernsetzpositionen (P) verlaufen, umfasst.

3. Luftreifen, der durch das Verfahren nach Anspruch 1 oder 2 hergestellt ist.

## Revendications

1. Procédé de fabrication d'un bandage pneumatique comprenant une nappe de carcasse (6A) ayant une portion de corps de nappe toroïdale (6a) qui s'étend depuis une portion formant bande de roulement (2) jusqu'à des âmes de talons (5) dans des portions de talons (4) via des portions de parois latérales (3), et des portions de nappe rabattues (6b) qui sont en continu avec la portion de corps de nappe (6a) et qui sont rabattues autour desdites âmes de talons (5) depuis l'intérieur vers l'extérieur en sens axial, et des caoutchoucs de sommet de talons (8) s'étendant radialement vers l'extérieur depuis lesdites âmes de talons (5) entre ladite portion de corps de nappe (6a) et lesdites portions de nappe rabattues (6b), le procédé étant **caractérisé en ce qu'**il inclut :
une étape de bobinage de carcasse consistant à bobiner circonférentiellement une nappe de carcasse semblable à une feuille (6A) sur une forme de moulage pour former une nappe cylindrique (6A1),
une étape de mise en place d'âmes de talons consistant à placer des âmes de talons (5) à des positions de mise en place d'âmes (P) situées sur ladite nappe cylindrique (6A1) et sur les deux côtés de celle-ci en sens axial,
une étape d'enroulement de ruban consistant à former des corps enroulés en ruban (21) pour former les caoutchoucs de sommet de talons (8) en enroulant en spirale un long ruban de caoutchouc étroit dans la direction circonférentielle du pneumatique avec un recouvrement sur une portion intérieure de nappe (6A1a) de ladite nappe cylindrique (6A1) qui est située axialement à l'intérieur desdites positions de mise en place d'âmes (P) et qui constitue la portion de corps de nappe (6a), et/ou sur des portions extérieures de nappe (6A1b) de ladite nappe cylindrique (6A1) qui sont situées axialement à l'intérieur desdites positions de mise en place d'âmes (P) et qui constituent les portions de nappe rabattues (6b),
une étape d'expansion consistant à mettre en expansion sous forme toroïdale ladite portion intérieure de nappe (6A1a) de ladite nappe cylindrique (6A1), et
une étape de jonction consistant à joindre ladite portion intérieure de nappe (6A1a), lesdits corps (21) en ruban enroulé et lesdites portions extérieures de nappe (6A1b) en rabattant lesdites portions extérieures de nappe (6A1b) de ladite nappe cylindrique (6A1) autour desdites âmes de talons (5) pour prendre en sandwich lesdits corps en ruban enroulé (21) entre ladite portion intérieure de nappe toroïdale (6A1a) et lesdites portions extérieures de nappe (6A1b),
dans lequel ladite étape d'enroulement de ruban inclut une étape consistant à former des corps en ruban enroulé intérieurs (21a) sur ladite portion intérieure de nappe (6A1a), est une étape consistant à former des corps en ruban enroulé extérieurs (21b) sur lesdites portions extérieures de nappe (6A1b) et, dans ladite étape de jonction, ladite portion intérieure de nappe (6A1a) et, lesdits corps en ruban enroulé intérieurs et extérieurs (21a, 21b), et lesdites portions extérieures de nappe (6A1b) sont joints les uns aux autres.

2. Procédé selon la revendication 1, dans lequel ladite étape d'enroulement de ruban est exécutée avant ladite étape de mise en place d'âmes de talons, et inclut une étape consistant à former des corps de connexion en ruban enroulé (21) pour connecter lesdits corps en ruban enroulé intérieurs et extérieurs (21a, 21b), qui passent par lesdites positions de mise en place d'âmes (P).

3. Bandage pneumatique fabriqué par le procédé selon la revendication 1 ou 2.
